# EUROPEAN PATENT SPECIFICATION

(11) **EP 1 289 708 B1**
(45) Date of publication and mention of the grant of the patent: **03.05.2006**
(21) Application number: 01944780.4
(22) Date of filing: 30.05.2001
(51) Int. Cl.: B23K 37/053

(54) **METHOD AND APPARATUS FOR USE IN APPLYING HEATING**
VERFAHREN UND VORRICHTUNG ZUR VERWENDUNG BEIM ERWÄRMEN
PROCEDE ET APPAREIL POUR APPLIQUER DE LA CHALEUR

(30) Priority: 01.06.2000 CA 2310376
(43) Date of publication of application: 12.03.2003
(73) Proprietor: ShawCor Ltd., Rexdale, Ontario M9W 1M7 (CA)
(72) Inventor: BROWN, Robert J. c/o International Development Co., Abu Dhabi (AE); BECHTOLD, Thomas, H., 47495 Rheinberg (DE); SEEPERSAUD, David, Etobicoke, Ontario M9W 7B7 (CA)
(74) Representative: Marlow, Nicholas Simon
(86) International application number: PCT/CA2001/000781
(87) International publication number: WO 2001/091966

(56) References cited:
- WO-A-01/34340
- US-A- 2 108 077
- US-A- 5 655 699
- US-A- 5 980 191

## Description

The present invention relates to methods and apparatus for use in applying heating particularly on a zone of an elongate tubular article, for example when installing heat shrink products such as heat shrinkable sleeves on coated pipes.

Certain field-applied coatings require heating the substrate prior to installation. Heat shrinkable sleeves virtually always require this, particularly when the functional coating is a hot melt adhesive. The most common and convenient way to install heat-shrinkable sleeves to a weld-joint is to use a high intensity flame, most typically with the use of a propane torch. Unfortunately, some pipeline coatings are easily damaged if a flame is directly impinged onto them. Two common examples of heat-sensitive coatings are polypropylene coatings and coal-tar enamel coating.

Recently, sleeves have been designed for application to the field joints on polypropylene-coated pipe. Such sleeves and procedures for applying them are described in applicant's co-pending Canadian patent application serial No. 2,308,802 filed May 18, 2000. With this system, preferably the steel is preheated to a temperature of at least 180°C, and more preferably 200°C. For smaller pipes, this is accomplished using propane or LNG torches trained directly on the steel by the installers. This creates a number of concerns in practice:
1. While it is important to warm the polypropylene pipe coating, polypropylene decomposes readily when exposed directly to the heat of such a flame. The result is the generation of waxy materials to which the sleeve will not adhere.
2. Polypropylene coating compounds contain significant amounts of thermal and UV stabilizers. These are rapidly depleted by exposure to a direct flame.
3. If the polypropylene coating is heated to too high a temperature, it and the underlying hotmelt adhesive will melt, resulting in shrink back, warping, and in severe cases actual flow.
4. In windy conditions, it is difficult to focus the heat accurately on the weld joint, making it very difficult to achieve uniform temperature.
5. In windy conditions, much of the energy is lost to the wind, increasing significantly the length of time and amount of fuel required to achieve the required temperature.

It is known to cover exposed coating with fireproof blankets to prevent damage from welding sparks, and these have also been used to prevent direct exposure to flame during preheating, and even during shrinking. However, these procedures are not entirely satisfactory and it would be desirable to provide methods and apparatus that accomplish one or more of the following:
1. Protect the pipe coating from being damaged by the flame.
2. Insulate the coating, so that heat travelling through the underlying steel and up through the coating will provide a more uniform temperature distribution in the coating.
3. Trap the heat within the joint area, thereby reducing substantially the time and fuel requirements to heat the joint, particularly on a windy day.

In accordance with the invention there is provided a method for use in applying heating on a zone of an elongate tubular article comprising applying a heat shield on the article at each side of a zone to which the heating is to be applied, each heat shield comprising an at least partially cylindrical portion extending in a circumferential direction of the article and a planar portion extending radially outwardly from an inner end of the cylindrical portion.

The shields may be installed over an insulating fireproof blanket, which may be wrapped around a pipe coating at either end of a weld joint.

The invention also provides apparatus for use in applying heating on a zone of an elongate tubular article, comprising two similar heat shields each comprising an at least partially cylindrical portion adapted to extend in a circumferential direction of the article and a planar portion extending radially outwardly from an inner end of the cylindrical portion.

The invention will now be described in more detail, by way of example only, with reference to the accompanying drawings, wherein
Fig. 1 is a partially schematic side view showing a pipe joint together with apparatus in accordance with the invention for use in applying heating thereto;
Fig. 2 is a view similar to Fig. 1 showing a modified form of the apparatus;
Fig. 3 is a partially schematic end view of a heat shield suitable for use in the apparatus of the invention, and
Fig. 4 is a partially schematic axial section through the heat shield of Fig. 3.

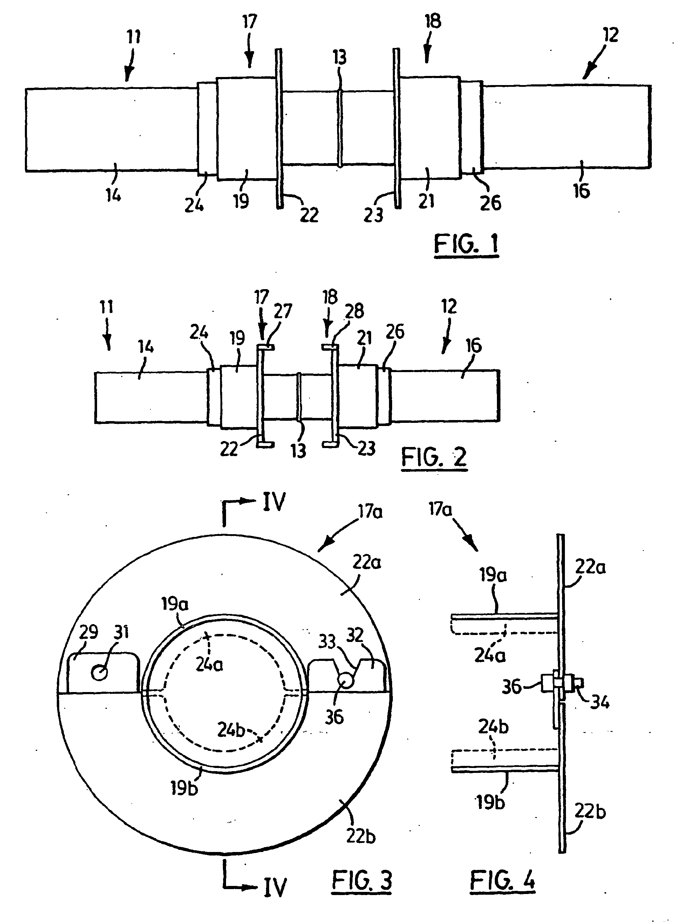

Fig. 1 shows pipe sections 11 and 12 welded together at a weld joint 13. It may be desired to apply a heat shrinkable sleeve covering the exposed bare metal of the pipe sections 11 and 12 adjacent the weld joint 13.

Outwardly from the joint 13, each pipe section 11 and 12 has a polyolefin, for example polypropylene pipe coating 14 and 16 thereon.

In this invention, applied over each pipe section 11 and 12 at each side of the zone of the joint 13 is a heat shield, 17 and 18, respectively. Each heat shield 17 and 18 may comprise a cylindrical tubular portion 19 and 21, each preferably of diameter somewhat greater than the outside diameter of the coated pipe sections including the coatings 14 and 16, so that there is an annular space between the inside of the sections 19 and 21 and the coatings 14 and 16.

Each section 19 and 21 has an annular flange 22 and 23, respectively, connected on its axial inner end.

In the preferred form, the heat shield 17 and 18 are installed over an insulating fireproof blanket 24 and 26, which is applied, for example is wrapped, around the pipe coating 14 and 16 at either end of the weld joint. The tubular portion 19 and 21 encloses the pipe 11 and 12, and at least a part of the blanket 24 and 26. Conveniently, the blanket 24 and 26 may be connected to a radially inner side of the cylindrical portion 19 and 21.

In use, when heat is applied to the zone exposed between the flanges 22 and 23, for example in the course of shrinking a heat shrink sleeve onto the area of the weld joint 13, the flanges 22 and 23 prevent hot gases from the torch from escaping from the region of the weld joint 13 that the two flanges 22 and 23 enclose. This not only prevents the heat from impinging on the pipe 11 and 12 outside this area, but also improves heat transfer to the weld joint surfaces.

Fig. 2 illustrates a modified form of heat shield, wherein a cylindrical edge flange 27 and 28 extends axially inwardly from the radially outer edge of each portion 22 and 23. This design more effectively entraps the heat in the zone adjacent the weld 13.

In the preferred form, the heat shields 17 and 18 comprise a completely cylindrical tubular portion 19 or 21. However, in some instances it may be acceptable to employ a heat shield that comprises only a part cylindrical portion, for example a semi-cylindrical portion. Such part-cylindrical device may be used, for example, when the heating is to be applied to only a portion of the circumference of the pipe 11 or 12 or other article, for example when applying a patch on a holiday on a pipe coating.

The material of the blanket 24 and 26 may be any material which does not burn, for example NOMEX (trademark), and which has some thermal insulating property.

The heat shield 17 and 18 may be made of any material capable of withstanding direct impingement with a propane, butane, methane or natural gas flame of the type well known in the pipeline construction industry. Preferred properties of the material include rigidity, low weight, low specific heat, in order to allow rapid cool down, and ease of fabrication. Preferably, the heat shields 17 and 18 are made of sheet metal. Aluminium and magnesium alloys are ideal materials, because they are inexpensive, light and rigid, and combine very high thermal conductivity with low specific heat. Further, they are easily cut, shaped, machine welded and fastened.

The shields 17 and 18 are preferably formed in two pieces so that they can be clamped around the pipe. The two pieces may be hinged, or may be simply joined by simple fasteners such as bolts. In a preferred form, the two portions are connected together at an axial hinge about which the portions can pivot between an open position at which the portions can be applied on the article at a point intermediate its ends. This avoids the need to slide the heat shield axially along a pipe length from an accessible end. The two portions can be pivoted together to a closed position in which the half portions together extend around the girth of the article.

Figs. 3 and 4 show a two portion heat shield 17a wherein the cylindrical portion comprises two semi-cylindrical portions 19a and 19b, and the annular planar portion comprises two semi annular portions 22a and 22b. A semi-cylindrical fire resistant blanket portion 24a and 24b is connected integrally to a radially inner side of each portion 19a and 19b.,

Portion 22b carries an offset tab portion (29) through which passes a pivot pin 31 that also passes through the portion 22a. At an opposite side, the portion 22b carries an offset tab portion 32 having a circumferentially extending slot 33 in which is received a threaded stud 34 connected to the other portion 22a. A release nut 36 is threaded on the stud, and can be loosened, allowing the two portions 22a and 22b together with the portions 19a and 19b to be opened like a clam shell. The device is then placed around the pipe and closed, and the release nut 36 tightened.

## Claims

1. A method for use in applying heating on a zone of a coated elongate tubular article (11,12) comprising applying a heat shield (17,18) on the article (11,12) at each side of a zone (13) to which the heating is to be applied, each heat shield (17,18) comprising an at least partially cylindrical portion (19,21) extending in a circumferential direction of the article (11,12) and a planar portion (22,23) extending radially outwardly from an inner end of the cylindrical portion (19,21).

2. A method as claimed in claim 1 in which the cylindrical portion (19,21) comprises a cylindrical tube and the planar portion (22,23) comprises an annulus.

3. A method as claimed in claim 1 or 2 in which the planar portion (22,23) has an at least partially cylindrical edge flange (27,28) extending axially inwardly from a radially outer edge thereof.

4. A method as claimed in any one of claims 1 to 3 in which each heat shield (17,18) comprises two part cylindrical portions (19a,19b) adapted to be connected together to extend around the circumference of the article (11,12).

5. A method as claimed in claim 4 in which said portions (19a,19b) are connected together at an axial hinge (29,31) about which the portions (19a,19b) pivot between an open position in which said portions (19a,19b) can be applied on the article (11,12) at a point intermediate its ends, and a closed position in which the half portions together extend around the girth of the article (11,12).

6. A method as claimed in any one of claims 1 to 5 in which each said heat shield (17,18) comprises heat resistant sheet metal.

7. A method as claimed in any one of claims 1 to 6 including interposing a fire resistant blanket (24,26) between an outer surface of the article (11,12) and each cylindrical portion (19,21).

8. Apparatus for use in applying heating on a zone of a coated elongate tubular article (11,12), comprising two similar heat shields (17,18) each comprising an at least partially cylindrical portion (19,21) adapted to extend in a circumferential direction of the article (11,12) and a planar portion (22,23) extending radially outwardly from an inner end of the cylindrical portion (19,21).

9. Apparatus as claimed in claim 8 in which the cylindrical portion (19,21) comprises a cylindrical tube and the planar portion comprises an annulus.

10. Apparatus as claimed in claim 8 or 9 in which the planar portion (22,23) has an at least partially cylindrical edge flange (27,28) extending axially inwardly from a radially outer edge thereof.

11. Apparatus as claimed in any one of claims 8 to 10 in which each said heat shield (17,18) comprises heat resistant sheet metal.

12. Apparatus as claimed in any one of claims 8 to 11 in which each heat shield (17,18) comprises two part cylindrical portions (19a,19b) adapted to be connected together to extend around the circumference of the article (11,12).

13. Apparatus as claimed in claim 12, wherein said portions (19a,19b) are connected at an axial hinge (29,31) about which the portions (19a,19b) pivot between an open position in which said portions can be applied on the article (11,12) at a point intermediate its ends, and a closed position in which the half portions (19a,19b) together extend around the girth of the article (11,12).

14. Apparatus as claimed in any one of claims 8 to 13 including a fire resistant blanket (24,26) connected to a radially inner side of the or each cylindrical portion (19,21).

15. A kit for use in applying heating on a zone of an elongate tubular article (11,12) comprising apparatus as claimed in any one of claims 8 to 13 and in combination therewith a fire resistant blanket (24,26) adapted to be interposed between an outer surface of the article (11,12) and each cylindrical portion (19,21).

## Patentansprüche

1. Verfahren zur Verwendung beim Anwenden von Erwärmung auf eine Zone eines beschichteten länglichen röhrenförmigen Artikels (11, 12), umfassend das Aufbringen eines Hitzeschilds (17, 18) auf den Artikel (11, 12) an jeder Seite einer Zone (13), auf die die Erwärmung angewendet soll, wobei jeder Hitzeschild (17, 18) einen wenigstens teilweise zylindrischen Abschnitt (19, 20), der in einer Umfangsrichtung des Artikels (11, 12) verläuft, und einen planaren Abschnitt (22, 23) umfasst, der von einem inneren Ende des zylindrischen Abschnitts (19, 21) radial nach außen verläuft.

2. Verfahren nach Anspruch 1, bei dem der zylindrische Abschnitt (19, 21) eine zylindrische Röhre umfasst und der planare Abschnitt (22, 23) einen Kreisring umfasst.

3. Verfahren nach Anspruch 1 oder Anspruch 2, bei dem der planare Abschnitt (22, 23) einen wenigstens teilweise zylindrischen Randflansch (27, 28) aufweist, der von einem radial äußeren Rand davon axial nach innen verläuft.

4. Verfahren nach einem der Ansprüche 1 bis 3, bei dem jeder Hitzeschild (17, 18) zweiteilige zylindrische Abschnitte (19a, 19b) umfasst, die ausgestaltet sind, um miteinander verbunden zu werden, damit sie um den Umfang des Artikels (11, 12) verlaufen.

5. Verfahren nach Anspruch 4, bei dem die genannten Abschnitte (19a, 19b) an einem axialen Gelenk (29, 31) miteinander verbunden sind, um das sich die Abschnitte (19a, 19b) zwischen einer offenen Stellung, in der die genannten Abschnitte (19a, 19b) auf den Artikel (11, 12) an einem Punkt zwischen seinen Enden aufgebracht werden können, und einer geschlossenen Stellung, in der die Abschnitthälften zusammen um den Umfang des Artikels (11, 12) herum verlaufen, drehen.

6. Verfahren nach einem der Ansprüche 1 bis 5, bei dem jeder genannte Hitzeschild (17, 18) hitzebeständiges Blech umfasst.

7. Verfahren nach einem der Ansprüche 1 bis 6, das das Zwischenlegen einer feuerbeständigen Decke (24, 26) zwischen einer Außenfläche des Artikels (11, 12) und jedem zylindrischen Abschnitt (19, 21) aufweist.

8. Vorrichtung zur Verwendung beim Anwenden von Erwärmung auf eine Zone eines beschichteten länglichen röhrenförmigen Artikels (11, 12), der zwei ähnliche Hitzeschilde (17, 18) umfasst, die jeweils einen wenigstens teilweise zylindrischen Abschnitt (19, 21), der zum Verlaufen in einer Umfangsrichtung des Artikels (11, 12) ausgestaltet ist, und einen planaren Abschnitt (22, 23) umfassen, der von einem inneren Ende des zylindrischen Abschnitts (19, 21) radial nach außen verläuft.

9. Vorrichtung nach Anspruch 8, bei der der zylindrische Abschnitt (19, 21) eine zylindrische Röhre und der planare Abschnitt einen Kreisring umfasst.

10. Vorrichtung nach Anspruch 8 oder Anspruch 9, bei dem der planare Abschnitt (22, 23) einen wenigstens teilweise zylindrischen Randflansch (27, 28) hat, der von einem radial äußeren Rand davon axial nach innen verläuft.

11. Vorrichtung nach einem der Ansprüche 8 bis 10, bei der der genannte Hitzeschild (17, 18) hitzebeeständiges Blech umfasst.

12. Vorrichtung nach einem der Ansprüche 8 bis 11, bei der jeder Hitzeschild (17, 18) zwei teilweise zylindrische Abschnitte (19a, 19b) umfasst, die ausgestaltet sind, um miteinander verbunden zu werden, damit sie um den Umfang des Artikels (11, 12) verlaufen.

13. Vorrichtung nach Anspruch 12, bei der die genannten Abschnitte (19a, 19b) an einem axialen Gelenk (29, 31) miteinander verbunden sind, um das sich die Abschnitte (19a, 19b) zwischen einer offenen Stellung, in der die genannten Abschnitte (19a, 19b) auf den Artikel (11, 12) an einem Punkt zwischen seinen Enden aufgebracht werden können, und einer geschlossenen Stellung, in der die Abschnitthälften (19a, 19b) zusammen um den Umfang des Artikels (11, 12) herum verlaufen, drehen.

14. Vorrichtung nach einem der Ansprüche 8 bis 13 mit einer feuerbeständigen Decke (24, 26), die mit einer radial inneren Seite des oder jedes zylindrischen Abschnitts (19, 21) verbunden ist.

15. Bausatz zur Verwendung beim Anwenden von Erwärmung auf eine Zone eines länglichen röhrenförmigen Artikels (11, 12), der eine Vorrichtung gemäß einem der Ansprüche 8 bis 13 und in Kombination damit eine feuerbeständige Decke (24, 26) umfasst, die zum Zwischenlegen zwischen einer Außenfläche des Artikels (11, 12) und jedem zylindrischen Abschnitt (19, 21) ausgeführt ist.

## Revendications

1. Procédé à utiliser en appliquant de la chaleur sur une zone d'un article tubulaire allongé revêtu (11, 12), comprenant appliquer un écran thermique (17, 18) sur l'article (11, 12) de chaque côté d'une zone (13) à laquelle la chaleur doit être appliquée, chaque écran thermique (17, 18) comprenant une portion au moins partiellement cylindrique (19, 21) s'étendant dans une direction circonférentielle de l'article (11, 12) et une portion plane (22, 23) s'étendant radialement vers l'extérieur d'une extrémité intérieure de la portion cylindrique (19, 21).

2. Procédé tel que revendiqué dans la revendication 1, dans lequel la portion cylindrique (19, 21) comprend un tube cylindrique et la portion plane (22, 23) comprend un espace annulaire.

3. Procédé tel que revendiqué dans la revendication 1 ou 2, dans lequel la portion plane (22, 23) a une bride de bord au moins partiellement cylindrique (27, 28) s'étendant axialement vers l'intérieur d'un bord radialement extérieur de celle-ci.

4. Procédé tel que revendiqué dans l'une quelconque des revendications 1 à 3, dans lequel chaque écran thermique (17, 18) comprend deux portions partiellement cylindriques (19a, 19b) adaptées pour être raccordées ensemble afin de s'étendre autour de la circonférence de l'article (11, 12).

5. Procédé tel que revendiqué dans la revendication 4, dans lequel lesdites portions (19a, 19b) sont raccordées ensemble au niveau d'une articulation axiale (29, 31) autour de laquelle les portions (19a, 19b) pivotent entre une position ouverte dans laquelle lesdites portions (19a, 19b) peuvent être appliquées sur l'article (11, 12) à un point à l'intermédiaire de ses extrémités, et une position fermée dans laquelle les demi-portions s'étendent ensemble autour de la circonférence de l'article (11, 12).

6. Procédé tel que revendiqué dans l'une quelconque des revendications 1 à 5, dans lequel ledit écran thermique (17, 18) comprend de la tôle résistante à la chaleur.

7. Procédé tel que revendiqué dans l'une quelconque des revendications 1 à 6, comprenant interposer une couverture résistante au feu (24, 26) entre une surface extérieure de l'article (11, 12) et chaque portion cylindrique (19, 21).

8. Appareil à utiliser en appliquant de la chaleur sur une zone d'un article tubulaire allongé revêtu (11, 12), comprenant deux écrans thermiques semblables (17, 18), comprenant chacun une portion au moins partiellement cylindrique (19, 21) adaptée pour s'étendre dans une direction circonférentielle de l'article (11, 12) et une portion plane (22, 23) s'étendant radialement vers l'extérieur d'une extrémité intérieure de la portion cylindrique (19, 21).

9. Appareil tel que revendiqué dans la revendication 8, dans lequel la portion cylindrique (19, 21) comprend un tube cylindrique et la portion plane comprend un espace annulaire.

10. Appareil tel que revendiqué dans la revendication 8 ou 9, dans lequel la portion plane (22, 23) a une bride de bord au moins partiellement cylindrique (27, 28) s'étendant axialement vers l'intérieur d'un bord radialement extérieur de celle-ci.

11. Appareil tel que revendiqué dans l'une quelconque des revendications 8 à 10, dans lequel chaque dit écran thermique (17, 18) comprend de la tôle résistante à la chaleur.

12. Appareil tel que revendiqué dans l'une quelconque des revendications 8 à 11, dans lequel chaque écran thermique (17, 18) comprend deux portions partiellement cylindriques (19a, 19b) adaptées pour être raccordées ensemble afin de s'étendre autour de la circonférence de l'article (11, 12).

13. Appareil tel que revendiqué dans la revendication 12, dans lequel lesdites portions (19a, 19b) sont connectées au niveau d'une articulation axiale (29, 31) autour de laquelle les portions (19a, 19b) pivotent entre une position ouverte dans laquelle lesdites portions peuvent être appliquées sur l'article (11, 12) à un point à l'intermédiaire de ses extrémités, et une position fermée dans laquelle les demi-portions (19a, 19b) s'étendent ensemble autour de la circonférence de l'article (11, 12).

14. Appareil tel que revendiqué dans l'une quelconque des revendications 8 à 13, comprenant une couverture résistante au feu (24, 26) raccordée à un côté radialement intérieur de la portion cylindrique ou de chaque portion cylindrique (19, 21).

15. Kit à utiliser en appliquant de la chaleur sur une zone d'un article tubulaire allongé (11, 12), comprenant un appareil tel que revendiqué dans l'une quelconque des revendications 8 à 13 et en combinaison avec celui-ci, une couverture résistante au feu (24, 26) adaptée pour être interposée entre une surface extérieure de l'article (11, 12) et chaque portion cylindrique (19, 21).
